# EUROPEAN PATENT APPLICATION

(11) **EP 3 158 969 A1**
(43) Date of publication of application: **26.04.2017**
(21) Application number: 15002844.7
(22) Date of filing: 22.10.2015
(51) Int. Cl.: A61C 13/00, A61C 13/08

(54) **PROCEDURE TO PRODUCE TOTAL MOBILE DENTAL PROSTHESIS WITH AUTOMATED PROCESS**

(71) Applicant: Dentaltower Srl, 25030 Roncadelle (BS) (IT)
(72) Inventor: RIZZO, Rosario, Gussago (BS) (IT)

(57) **Abstract**

Construction of mobile dental prosthesis through connected and sequential phases that integrate IT technologies of rapid prototyping of vacuum cast to detect the dental impression, the teeth assembly, the articulator test, the cast moulding, the injection of biocompatible material, the chemical polishing.

## Description

The object of the present invention is a procedure to produce a **total mobile dental prosthesis -** intended for edentulous patients (having lost teeth) due to a disease or carelessness of the oral cavity - through an automated process that integrates multiple technologies already present in different industry sectors.
The here-presented invention puts in relation the results of prompt studies to determine the parameters necessary for the planning of the personalized prosthetic device, according to consolidated average values in literature, with the aim of avoiding power of decision both from the odontologist and prosthodontist.
The object of the present invention is placed in the health sector and, specifically, in the dental sector and in particular it refers to the production of a device (dental prosthesis) in biocompatible material able to allow the patients that have lost all their teeth to chew and improve their physical appearance in an excellent cost/performance ratio.

### STATE-OF-THE-ART

It is well known that the production techniques of a prosthesis are represented by a sequence of operations that provide among them seventeen passages entrusted partially to the power decision of the specialist, as far as the impression concerns and partially to the manual ability and experience of the prosthodontist that are required to interpret subjectively any single case, concerning the relative competences.

The sequence of the operations and the summary of empirical estimations generated by the various parties that interchange in the manual production cycle give results generally non-satisfying, both in terms of quality of the product and in terms of the cost/benefits ratio.
The manual production cycle provides:
- first panorex mascillary impression in alginate
- first mandibular impression in alginate
- individual over-impression detection in alginate
- vacuum cast in plaster
- individual impression-holder tracing
- construction of the individual impression-holder in resin
- control of the individual impression-holder
- individual framing and re-basing of the impression-holder
- teeth assembly: central, lateral, canine
- occlusal plane and assembly of the back teeth in articular
- placing of the prosthesis into the muffle
- heating of the muffle in warm water in order to soften the wax
- opening of the muffle and holing of the teeth blocked in the plaster
- mixture of resin and polymer, blending and evaporation
- filling with resin and muffle pressing
- placing of the muffle into the 6-bar polymerizing machine
- muffle extraction, smoothing and polishing of the prosthesis
At the moment the market of the total mobile prosthesis represents in emancipated countries a market share amounting to 8/12%, mainly composed of poor persons and it gains more considerable values in less emancipated countries (developing countries) where it reaches 34/45% of the population.
The dental sector observes that the actual production process makes the distribution of this device typology always less spread, due to the progressive loss of experience by prosthodontists on profitability reasons and on the incidence of the management costs of a dental laboratory that is engaged at least for five appointments.
On the other hand, the total cost for the user is anyway expensive and difficult to be accepted.

### THE INVENTION

The technical task pursued at the base of the present invention is the carrying out of a procedure to produce a quality total mobile prosthesis through a rapid operation, in seven operations only, able to solve the mentioned inconveniences and not to affect on the management costs of the dental laboratory, requiring two dental appointments only.
A further aim of the present invention is to get, through the use of technologies already successful in other sectors, the possibility of personalizing the product, increasing the qualitative standard in an extremely competitive quality/price ratio.
Another aim of the present invention is to carry out a state-of-the-art prosthetic product according to the best dentistry and dental technology literature.
As a matter of fact, the aim of the present invention is to offer on the market a practical product, convenient to be produced, to allow a wider spread.
Another aim of the present invention is to get, through the use of a multiplicity of technologies (IT, vision, rapid prototyping, vacuum cast, chemical bath) a dental prosthesis according to the physical characteristics of the user. Another aim of the present invention is to carry out a product in conformity with the technical-scientific requirements established in literature, for a better functional result.

Another aim is to carry out analysis, necessary for the carrying out of the prosthesis lacking X-rays, cephalometric analysis, for a less impact on the person and environment.
The social aim of the invention is the carrying out of a low-cost prosthesis, so that the poorest user can get it, in order to let anyone have an acceptable life comfort.
The mentioned technical task and the specified aims are basically reached from a process that detects the cast of the mouth, plans the prosthesis, assembles the teeth from a pre-set library, controls the functioning in articulator, all in VIRTUAL MODE, until generating a model in STL language that can be imported to a 3D printer for rapid prototyping, able to originate due moulds in silicon, respectively of the teeth only (white teeth) and of the complete prosthesis (teeth + gums), whose use have been already consolidated in dental technology and it is available in a wide range of colours.
The final phase of the process can indifferently occur for simple injection, from a common syringe or through a simplified vacuum injection machine, able to allow the casting of the white resin into the mould of the teeth only, the placing of the teeth into the mould of the complete teeth where the pink resin of the gum will be in turn drained.

As a last step, the polishing of the prosthesis, always mechanically possible, is provided in a nontoxic chemical bath.

By definition the total prosthesis is the prosthetic rehabilitation mainly bound to the operative technique it has been carried out with.

In the edentulous patient, so that the prosthesis is balanced from a neuromuscular point of view, it is firstly necessary to identify the correct distance between the lower and upper arch **(vertical dimension).**

The clinical and technical documented protocols are the results of academic and clinical researches from renowned professionals, recognized masters in dentistry and dental technology and they compose the reference literature, aimed at fulfilling the highest integration of the prosthesis to the edentulous patient, with attention to the gnatologic and biomechanical aspects.

### INVENTION PHASES

a) the object of the present invention is an automated procedure aimed at the determination of aesthetical and functional parameters for the correct placement of the teeth and, consequently, a correct occlusal function, first in articulator and, then in the mouth. The present invention provides the determination of the **vertical dimension** through equipment properly designed (hardware + software), whose plan is produced in ***picture 1*,** composed of two video cameras, one placed frontal and the other lateral, both at a distance of six hundred millimetres from the face of the patient, that detect the distances among seven reference points of the face ***(picture 2)*:**
   A. final hairline or frontal line
   B. glabella
   C. nose base
   D. kin end
   E. labial fissure end
   F. nose wing
   G. mandibular temporal joint
   According to consolidated literature, the average distance that can be measured between AandB and between BandC is equal to the distance from CandD: in this way, it is established by the equipment properly designed as per ***picture*** 1 the height of the front tooth as first data of the prosthetic rehabilitation with automatic determination of point D (not detachable on the patient as the absence of teeth has reduced the vertical dimension).
   As a matter of fact, the equipment (hardware + software) allows the guided tracing of anatomical landmarks of the single patient, identifying: the profile of the labial fissure end, the occlusal plane, the Stuart plane, the length of the front tooth, the distance of the occlusal plane (parameterized in millimetres) **(picture 3).** The frontal view is characterized from six reference points **(picture 4):**
   A. final hairline or frontal line
   J. left cheekbone
   I. right cheekbone
   L. left end of the labial fissure
   M. right end of the labial fissure
   D. kin end
   that allows to identify the distance among the cheekbones, pupil line angle, mouth line angle, difference between pupil/mouth line angle.
b) The here-presented invention with the determination of the length of the front tooth allows to start in virtual mode **the teeth assembly,** determining the Cartesian plane and, consequently, the positioning of the front teeth, chosen by a library recognized in literature and virtually modeled according to the prompt data of the single person, starting from the front tooth that will have a length equal to a sixteenth of the distance between the cheekbones, guaranteeing the appearance and the correct assembly of the back teeth with care of the lower teeth in a right balance of intercuspation, increasing the stability and improving retention.
**c)** The here-presented invention provides to take the **gingival impression** through a intra-oral video camera and transmit the data in an intended plug-in, object of the invention, to **the virtual assembly of the teeth.**
d) The horizontal cranium-mandibular recordings (centric relations) and vertical (occlusion vertical dimension) are made possible by a **virtual articulator,** properly designed, object of the present invention, that has the task to reproduce the movement of the mandible, so simulating the movement of the mouth in the various positions and the strength, so that the patient can chew and smile.
   The virtual articulator can:
   - duplicate exactly the strength and movements of the chewing phase
   - reproduce the temperature conditions of aeration and humidity, typical of the natural mouth
   - test the reaction capacity of the materials to natural or artificial saliva
e) the here-presented invention provides the overlapping of the impression virtually generated to the virtual teeth, defining the teeth/gums line until the translation of STL language to be transmitted to a 3D printer for the **rapid prototyping** that will issue two cores, respectively of the complete dental plate and of the only teeth in plastic material.
   The here-presented invention provides the construction of a mould-holder box where to place the core in turns and inject silicon for the carrying out of two distinct moulds to be intended for the casting of the biocompatible resin (white for the teeth and pink for the gums) always consolidated in dental technology and available in a range of unlimited tonalities.
f) The here-presented invention provides **the injection of biocompatible resins,** indifferently from syringe or through a vacuum injection equipment with simplified equipment, properly designed, object of the present invention, at low production cost.
   The resin casting through discharge drains for air deposit will be effected in the following sequence:
   1. casting of the white resin into the silicon mould of the impression of the only teeth
   2. introduction of the white teeth cast in the complete mould teeth + gums
   3. casting of the resin in pink colour
   4. extraction of the prosthesis from the mould
g) the **polishing** of the prosthesis, always mechanically possible, is provided by chemical bath.

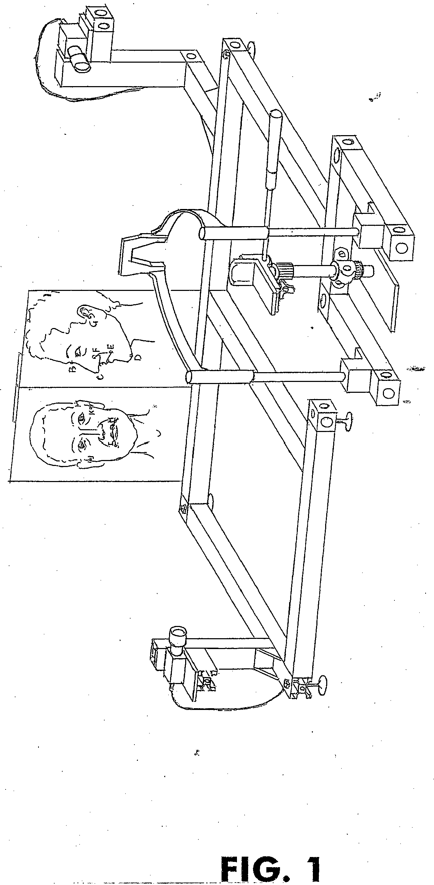

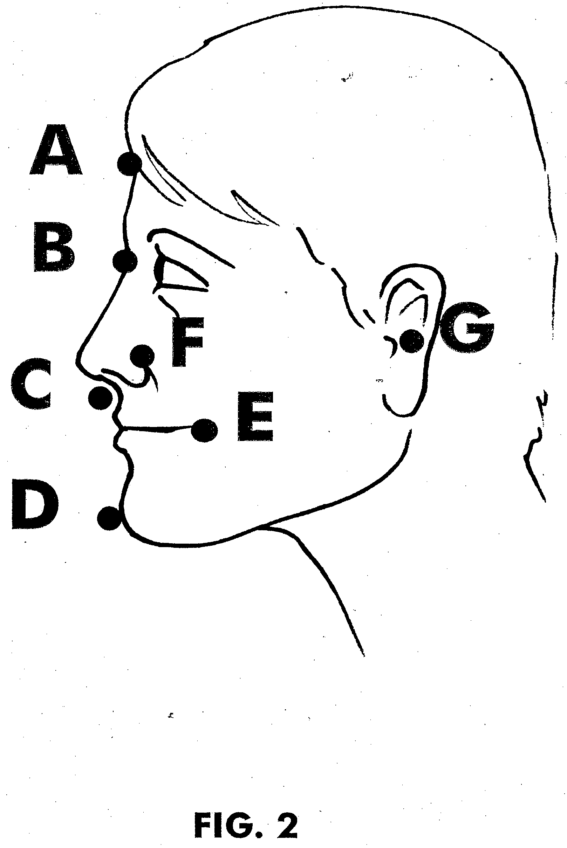

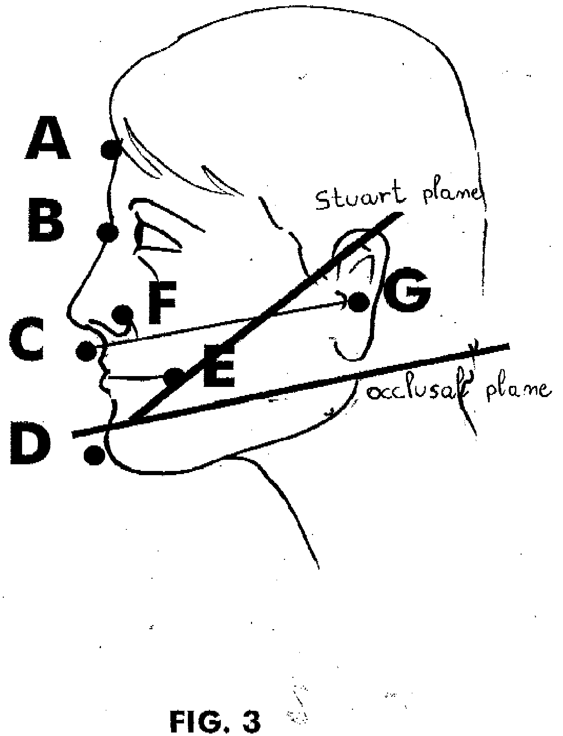

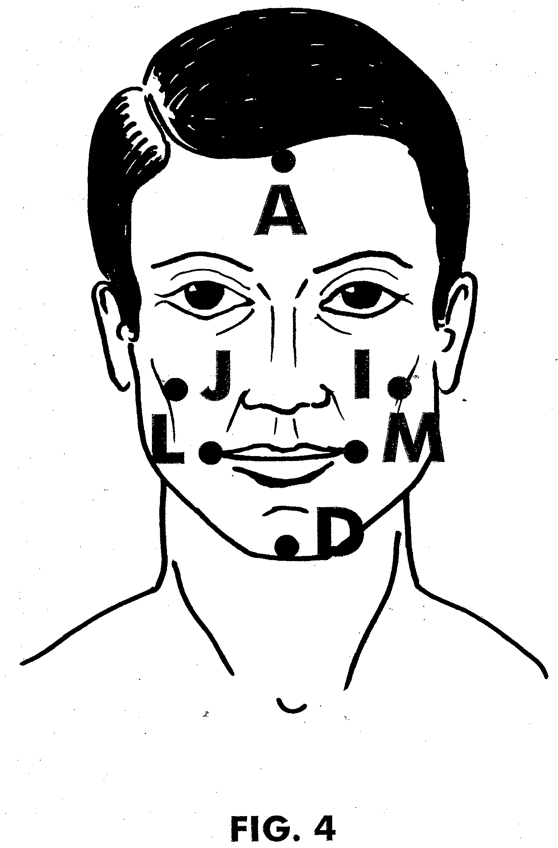

## Claims

1. Procedure to produce total mobile dental prosthesis with automated process: **detection of the impression and determination of the parameters of aesthetical/functional modeling.**
Engineering of the production process with comparison to the consolidated operative protocols in literature (GYSI,GERBER,POUND,LAURITZEN,SLAVICECK,STRACK,ACKERMANN,KEYWORTH,P ASSAMONTI,ZOLLO,DELLA PIETRA) for the determination of the relations among the body reference points in order to define **the vertical dimension** through properly designed equipment (hardware + software), whose plan is produced in picture 1, composed of two video cameras, one placed frontal and the other lateral, both at a distance of six hundred millimetres from the face of the patient, on whose image acquired by the calculator it is possible to measure the distances among the body reference points to calculate automatically the vertical dimension (point D of picture 1 = distance between CandD equal to the average value of the distances between AandB and BandC), that determine the length of the upper front tooth and the width of the upper front tooth equal to a sixteenth of the distance between Yel picture 4.

2. **Virtual assembly of the teeth** on gingival impression acquired by intra-oral video cameras through an intended **plug-in,** object of the invention, that models and adjust the standard teeth acquired by pre-set library in conformity with the morphology of the single patient, according to the qualitative standards detected from the dentistry and dental technology literature.

3. Functional check of chewing **on virtual articulator** that records the centric relations and the vertical dimension of occlusion and reproduces the movement of the mandible, simulating the movements in the different positions and the chewing resistance, reproducing the natural conditions of the mouth.

4. Transfer of the results of claims 1, 2, 3 in STL language for the 3D printing **(rapid prototyping**), in order to issue two cores, respectively of the complete dental plate and the only teeth in common plastic material, that is of low cost.

5. Carrying out of a **mould-holder box** and positioning of the air discharge channels (necessary to get a cast product, blowing free) for the distinct positioning of the two cores as per claim 4, where to inject hypoallergenic silicon, of contained cost, to carry out two distinct mould to be intended for biocompatible resin casting, consolidated in dental technology, available in a range of unlimited tonalities and contained cost.

6. Injection of biocompatible resins through the process of **vacuum casting** with simplified and properly designed equipment, or syringe in the following sequence:
1. casting of the white resin into the silicon mould of the impression of the only teeth
2. introduction of the white teeth cast in the complete mould teeth + gums
3. casting of the resin in pink colour
4. extraction of the prosthesis from the mould

7. Polishing of the prosthesis through **nontoxic chemical bath** with balancing of components compatible to the used materials.
